(19) Europäisches Patentamt
European Patent Office
Office européen des brevets

(11) Veröffentlichungsnummer: **0 014 326**
**B1**

(12) # EUROPÄISCHE PATENTSCHRIFT

(45) Veröffentlichungstag der Patentschrift: **18.04.84**

(51) Int. Cl.³: **C 09 B 67/24,** D 06 P 1/38, D 06 P 1/62

(21) Anmeldenummer: **80100132.2**

(22) Anmeldetag: **11.01.80**

(54) **Farbstoffzusammensetzung und ihre Verwendung beim Färben und Bedrucken von Cellulose-Fasern.**

(30) Priorität: **13.02.79 JP 15788/79**
**13.11.79 JP 147505/79**

(43) Veröffentlichungstag der Anmeldung:
**20.08.80 Patentblatt 80/17**

(45) Bekanntmachung des Hinweises auf die Patenterteilung:
**18.04.84 Patentblatt 84/16**

(84) Benannte Vertragsstaaten:
**BE CH DE FR GB IT NL**

(56) Entgegenhaltungen:
**FR - A - 2 392 089**
**US - A - 4 088 441**

(73) Patentinhaber: **SUMITOMO CHEMICAL COMPANY, LIMITED, 15 Kitahama 5-chome Higashi-ku, Osaka-shi Osaka-fu (JP)**

(72) Erfinder: **Nakatsuka, Kiyoharu, 10-4-430, Sonehigashinocho-2-chome, Toyonaka-shi (JP)**
Erfinder: **Abeta, Sadaharu, 8-A-6-406, Shinsenriminamicho-3-chome, Toyonaka-shi (JP)**

(74) Vertreter: **Vossius Vossius Tauchner Heunemann Rauh, Siebertstrasse 4 P.O. Box 86 07 67, D-8000 München 86 (DE)**

**EP 0 014 326 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Dye composition and its use for dyeing and printing cellulose fibers

The present invention relates to a C.I. Reactive Blue 19 containing dyestuff composition which is very readily soluble in water or aqueous alkaline liquors and useful for dyeing cellulose fiber materials with a high color yield.

C.I. Reactive Blue 19 is a well-known and valuable anthraquinone reactive dye suitable for dyeing cellulose fibers; its free acid has the following formula:

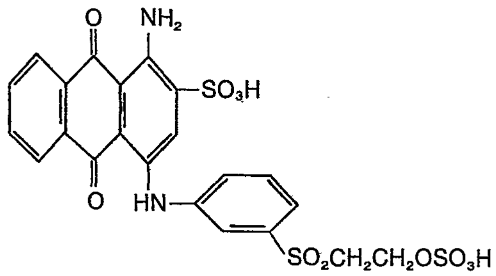

The so-called one-bath pad dyeing method, such as the one-bath pad-batch method, the one-bath pad-dry method and the one-bath pad-steam method have been effectively applied for dyeing natural and regenerated cellulose fibers. For these methods, however, it is essential to use dyestuffs having a high solubility in aqueous alkaline liquors. For example, in the one-bath pad-batch method, up to 100 parts by weight of a dyestuff must be dissolved in 1,000 parts by weight of an aqueous solution containing sodium hydroxide, sodium carbonate or trisodium phosphate and electrolytes. However, it is difficult to dissolve C.I. Reactive Blue 19 in aqueous-alkaline liquors. Level dyeings free dots (specks) and in deep shades are not obtained.

For improving the solubility of C.I. Reactive Blue 19, two methods are known, i.e. method (1) comprising the provision of a dyestuff composition containing a naphthalenesulfonic acid/formaldehyde condensate and the particular dye, and method (2) comprising the provision of a dyestuff composition comprising the particular dye, sodium anthraquinone-2-sulfonate, the sodium salt of a naphthalenesulfonic acid/formaldehyde condensate, the sodium salt of a condensed phosphate and a dust-preventing agent (U.S.-A-4 088 441).

In method (1) large amounts of the naphthalenesulfonic acid/formaldehyde condensate have to be added for obtaining a sufficient effect, while in method (2) the solubilities vary depending on the kind of the alkali contained in the aqueous alkaline dyeing liquor. Further, the foregoing dyestuff compositions produced by methods (1) and (2) are not satisfactory as regards dyeing efficiency, as is apparent from the following experiment: C.I. Reactive Blue 19 and sodium chloride or sodium sulfate were mixed to prepare a dyestuff composition having the same dyestuff content as that of the foregoing dyestuff compositions; dyeing was carried out according to the above one-bath pad dyeing method using such a low dyestuff concentration that the sodium chloride- or sodium sulfate-containing dyestuff composition was readily soluble in aqueous alkaline liquors. When comparing the color depth (hereinafter referred to as color yield) of both dyeings, it was found that the color yield of the foregoing dyestuff composition (improved in solubility) became equal to that of the latter dyestuff composition by increasing the amount by 2 to 5% by weight. Also, in dip dyeing methods not requiring high solubility of the dye unlike the one-bath pad dyeing method, the color yield of the foregoing dyestuff compositions is rather low, as compared with the sodium chloride- or sodium sulfate-containing dyestuff composition.

From FR-A-2 392 089 stable and concentrated aqueous dyestuff compositions for cold dyeing are known comprising water, a water-insoluble reactive dye or a mixture of such a reactive dye and a disperse dye having a particle size of less than 20 microns and an anionic dispersing agent, e.g. an optionally alkylated naphthalenesulfonic acid/formaldehyde condensate. This concentrated dyestuff composition preferably must have a pH of 4 to 6. The dispersing agent serves the purpose of stabilizing the storage stability of the aqueous dyestuff dispersion.

The technical problem underlying the present invention is to provide a dyestuff composition of the known dyestuff C.I. Reactive Blue 19 showing improved properties of the corresponding dyeing liquor including improved stability and solubility and an improvement of the color yield.

The present invention therefore provides a dystuff composition for dyeing cellulosic fiber materials consisting of C.I. Reactive Blue 19 of the above formula and $C_1$ to $C_4$ alkylnaphthalenesulfonic acid/formaldehyde condensate having a sulfonation degree of 50 to 150% and an average condensation degree of 1.1 to 3.0 in a weight ratio of 20 to 99 to 1 to 80, preferably 60 to 80 to 20 to 40 and usual additives. The sulfonation degree is preferably 80 to 120% and the average condensation degree is preferably 1.5 to 2.5. The invention relates also to the use of the dyestuff composition for dyeing or printing cellulose fiber materials.

The dyestuff compositions of the present invention are markedly soluble in various aqueous alkaline liquors, and can produce level dyeings free from specks with high dyeing efficiency and high color yield when used for dying cellulose fiber materials according to the said one-bath pad dyeing method.

The alkylnaphthalenesulfonic acid/formaldehyde condensate can be produced by conventional methods. As alkylnaphthalenesulfonic acid, preferably at least one member selected from methylnaphthalenesulfonic acid, ethylnaphthalenesulfonic acid, propylnaphthalenesulfonic acid and butylnaphthalenesulfonic acid is used. The sulfonation degree of these alkylnaphthalenesulfonic acids can be controlled by varying the reaction temperature. A sulfonation degree of 100% means that 1 mole of sulfonic acid is linked to 1 mole of alkylnaphthalene.

The alkylnaphthalenesulfonic acid/formaldehyde condensate may be used as an alkali metal salt. These condensates are obtained as a mixture of condensates having various condensation degrees. The average condensation degree can be controlled by varying the ratio of formaldehyde to alkylnaphthalenesulfonic acid.

The dyestuff compositions of the present invention may contain usual additives such as hydrotropic agents (e.g. urea or anthraquinone-2-sulfonic acid) and builders having little or no effect on the solubility of the dyestuff compositions (e.g. dextrin or sucrose). Further, electrolytes (e.g. sodium chloride or sodium sulfate) of small amounts which exert no adverse effect on the solubility of the dyestuff compositions, dust-preventing agents (e.g. mineral oil emulsions), pH stabilizers (e.g. disodium hydrogen phosphate) and water softeners (e.g. polyphosphates) may be added to the dyestuff compositions of the present invention.

The dyestuff compositions of the present invention are obtained by thoroughly mixing 20 to 99% by weight, preferably 60 to 80% by weight, of C.I. Reactive Blue 19, 1 to 80% by weight, preferably 20 to 40% by weight, of the aforesaid condensate and if necessary the aforesaid additives according to conventional methods well-known to those skulled in the art.

In carrying out the dyeing of cellulose fiber materials, such as natural or regenerated cellulose fibers, the dyestuff composition of the present invention is dissolved in water and mixed with an aqueous alkali solution to prepare a dye bath (for example a padding liquor). Alternatively, the dye bath can be prepared by mixing C.I. Reactive Blue 19 and the alkylnaphthalenesulfonic acid/formaldehyde condensate in the weight ratio of 20 to 99 : 80 to 1 together with an alkali and if desired additives as described above, in an aqueous medium. The dyeing is performed by padding said fibers through the dye bath in accordance with the one-bath pad dyeing method including the one-bath pad-batch method, one-bath pad-dry method and one-bath pad-steam method, whereby there can be obtained deep dyeings having excellent levelness and no specks.

The dyestuff compositions of the present invention can also be used in other conventional dyeing methods, i.e. the two-bath pad dyeing, printing and exhaustion deying methods.

The present invention is explained in more detail with reference to the following Examples, which are only illustrative and are not intened to limit one scope of the present invention. In Examples, parts are by weight.

Example 1

Sixty-eight parts of 74%purity C.I. Reactive Blue 19 (sodium salt), 31 parts of an ethylnaphthalenesulfonic acid/formaldehyde condensate (sodium salt) (sulfonation degree 100%, average condensation degree 2.5) and 1 part of a mineral oil emulsion were thoroughly mixed.

(1) The dye composition thus obtained (120 g) was dissolved in hot water and cooled to 25 °C. To the dye solution were added 32.5% aqueous sodium hydroxide solution (15 ml) and 50°Bé water glass (150 g), and then the volume of the mixture was made up to 1 liter at 25 °C with water to prepare a padding liquor. Immediately, cotton fabrics were padded through this liquor, batched up, wrapped airtighthly with polyethylene film and allowed to stand at 20 °C for 20 hours in a room. The dyeings were rinsed with cold water and then with hot water, soaped in a boiling bath containing a detergent, rinsed with cold water and dried. Thus, dyeings of good levelness and a markedly deep blue color were obtained.

(2) The padding liquor in (1) was allowed to stand at 25 °C for 90 minutes, but dye precipitation from the liquor was not observed at all. Thereafter, cotton fabrics were dyed in the same manner as in (1) using this padding liquor. Thus, very deep dyeings of good levelness were obtained.

Example 2

Sixty-eight parts of 74%purity C.I. Reactive Blue 19 (sodium salt), 31 parts of a methylnaphthalenesulfonic acid/formaldehyde condensate (sodium salt) (sulfonation degree 110%, average condensation degree 1.8) and 1 part of a mineral oil emulsion were thoroughly mixed.

(1) A padding liquor was prepared in the same manner as in (1) of Example 1 using the dye composition thus obtained (120 g). On dyeing cotton fabrics by padding with this liquor freshly produced, dyeings of good levelness were obtained, and the color yield of the dyeings was equal to that of the dyeings obtained in (1) of Example 1.

(2) The padding liquor in (1) was allowed to stand at 25 °C for 90 minutes, but dye precipitation from the liquor was not observed at all. On pad-dyeing cotton fabrics with this liquor, dyeings of good levelness were obtained.

Example 3

Seventy-nine parts of 74%purity C.I. Reactive Blue 19 (sodium salt), 20 parts of a methylnaphthalenesulfonic acid/formaldehyde condensate (sodium salt) (sulfonation degree 110%, average condensation degree 1.8) and 1 part of a mineral oil emulsion were thoroughly mixed.

(1) A padding liquor was prepared in the same manner as in (1) of Example 1 using the dye composition thus obtained (103 g). On pad-dyeing cotton fabrics with this liquor freshly produced, dyeings of good levelness were obtained, and the color yield of the dyeings was equal to that of the dyeings obtained in (1) of Example 1.

(2) The padding liquor in (1) was allowed to stand at 25 °C for 70 minutes, but dye precipitation from the liquor was not observed. On pad-dyeing cotton fabrics with this liquor, dyeings of good levelness were obtained.

Example 4

(1) Sixty-eight parts of 74% purity C.I. Reactive Blue 19 (sodium salt), 31 parts of anhydrous sodium sulfate and 1 part of a mineral oil emulsion were thoroughly mixed.

(2) The dye composition thus obtained (120 g) and 40 g a methylnaphhtalenesulfonic acid/formaldehyde condensate (sodium salt) (sulfonation degree 110%, average condensation degree 1.5) were dissolved in hot water and cooled to 25 °C.

(3) To the dye solution were added 32.5% aqueous sodium hydroxide solution (15 ml) and 50°Bé water glass (150 g), and then the volume of the mixture was made up to 1 liter at 25 °C with water to prepare a padding liquor. Immediately, cotton fabrics were padded with this liquor, batched up, wrapped airtight with polyethylene film and allowed to stand at 20 °C for 20 hours in a room. The dyeings were rinsed with cold water and then with hot water, soaped in a boiling bath containing a detergent, rinsed with cold water and dried. Thus, dyeings of good levelness and a markedly deep blue color were obtained.

(4) The padding liquor in (1) was allowed to stand at 25 °C for 90 minutes, but dye precipitation from the liquor was not observed at all. Thereafter, cotton fabrics were padding-dyed in the same manner as in (3) using this padding liquor. Thus, very deep dyeings of good levelness were obtained.

Comparative Example 1

Sixty-eight parts of 74% purity C.I. Reactive Blue 19 (sodium salt), 31 parts of a naphthalenesulfonic acid/formaldehyde condensate (sulfonation degree 100%, average condensation degree 5) and 1 part of a mineral oil emulsion were thoroughly mixed.

(1) A padding liquor was prepared in the same manner as in (1) of Example 1 using the dye composition thus obtained (120 g). Immediately after the preparation of the liquor, dye precipitation from the liquor was not observed, and dyeings of good levelness were obtained by pad-dyeing cotton fabrics with this liquor. But, the color yield of the dyeings was lower than that of the dyeings obtained in (1) of Example 1.

(2) On allowing the padding liquor in (1) to stand at 25 °C for 30 minutes, a large amount of the dye precipitated. Cotton fabrics were pad-dyed with this liquor, but only dyeings of extreme unlevelness and of no practical value were obtained.

(3) A padding liquor was prepared in the same manner as in (1) of Example 1 using the dye composition thus obtained (126 g). On pad-dyeing cotton fabrics with this liquor freshly produced, deep dyeings of good levelness were obtained, and the color yield of the dyeings was equal to that of the dyeings obtained in (1) of Example 1.

Comparative Example 2

Sixty-eight parts of 74% purity C.I. Reactive Blue 19 (sodium salt), 31 parts of a methylnaphthalenesulfonic acid/formaldehyde condensate (sodium salt) (sulfonation degree 98%, average condensation degree 3.5) and 1 part of a mineral oil emulsion were thoroughly mixed.

(1) A padding liquor was prepared in the same manner as in (1) of Example 1 using the dye composition thus obtained (120 g). Immediately after the preparation of the liquor, dye precipitation from the liquor was not observed, and deep-colored dyeings of good levelness were obtained by pad-dyeing cotton fabrics with this liquor. The color yield of the dyeings was equal to that of the dyeings obtained in (1) of Example 1.

(2) The padding liquor in (1) was allowed to stand at 25 °C for 60 minutes, but dye precipitation from the liquor was hardly observed. On pad-dyeing cotton fabrics with this liquor, dyeings of good levelness were obtained.

(3) On allowing the padding liquor in (1) to stand at 25 °C for 70 minutes, dye precipitation from the liquor was observed. Cotton fabrics were dyed by padding with this liquor, but only dyeings of unlevelness were obtained.

Comparative Example 3

According to the method described in Example 3 of U.S. Pat. Nr. 4 088 441, 68 parts of 74% purity C.I. Reactive Blue 19 (sodium salt), 7 parts of sodium anthraquinone-2-sulfonate, 4 parts of urea, 4 parts of a condensed phosphate, 14 parts of a naphthalenesulfonic acid/formaldehyde condensate (sodium salt) and 3 parts of a mineral oil emulsion were mixed.

(1) A padding liquor was prepared in the same manner as in (1) of Example 1 using the dye composition thus obtained (120 g). Immediately after the preparation of the liquor, dye precipitation from the liquor was not observed, and dyeings of good levelness were obtained by padding-dyeing cotton fabrics with this liquor. But, the color yield of the dyeings was lower than that of the dyeings obtained in (1) of Example 1, and similar to that of the dyeings obtained in (1) of Comparative Example 1.

(2) On allowing the padding liquor in (1) to stand at 25 °C for 30 minutes, dye precipitation from the liquor was observed. Cotton fabrics were dyed with this liquor by the padding, but only dyeings of unlevelness and of little practical value were obtained.

Comparative Example 4

Sixty-eight parts of 74% purity C.I. Reactive Blue 19 (sodium salt), 31 parts of an ethylnaphthalenesulfonic acid/formaldehyde condensate (sodium salt) (sulfonation degree 45%, average condensation degree 1.5) and 1 part of a mineral oil emulsion were thoroughly mixed.

(1) A padding liquor was prepared in the same manner as in (1) of Example 1 using the dye composition thus obtained (120 g). Immediately after 101the preparation of the liquor, dye precipitation from the liquor was not observed, and dyeings of good levelness were obtained by pad-dyeing cotton fabrics with this liquor. But the color yield of the dyeings was equal to that of the dyeings obtained in (1) of Comparative Example 1.

(2) The padding liquor in (1) was allowed to stand at 25 °C for 60 minutes, but dye precipitation from the liquor was hardly observed. By pad-dyeing cotton fabrics with this liquor, dyeings of good levelness were obtained.

(3) On allowing the padding liquor in (1) to stand at 25 °C for 90 minutes, the dye precipitated from the liquor. Cotton fabrics were pad-dyed with this liquor, but only dyeings of unlevelness were obtained.

Comparative Example 5

(1) A dye composition was prepared in the same manner as in (1) of Example 4.

(2) The dye composition thus obtained (120 g) was dissolved in hot water and then cooled to 25 °C.

(3) A padding liquor was prepared according to (3) of Example 4. Dye precipitation from the liquor was already observed immediately after the liquor was prepared. Cotton fabrics were pad-dyed with this liquor, but only dyeings of extreme unlevelness and of no practical value were obtained.

**Claims**

1. A dyestuff composition for dyeing cellulosic fiber materials consisting of C.I. Reactive Blue 19 of the formula

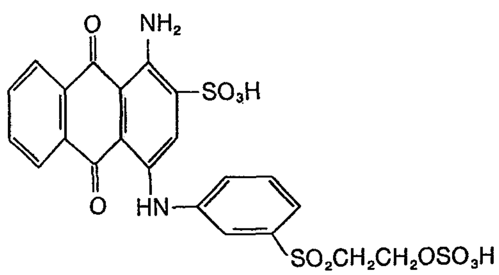

and a $C_1$ to $C_4$ alkylnaphthalenesulfonic acid/formaldehyde condensate having a sulfonation degree of 50 to 150% and an average condensation degree of 1.1 to 3.0 in a weight ratio of 20 to 99 to 1 to 80 and usual additives.

2. A dyestuff composition according to Claim 1, wherein said alkylnaphthalenesulfonic acid is at least one member selected from methyl-, ethyl-, propyl- and butyl-naphthalenesulfonic acids.

3. A dyestuff composition according to Claim 1, wherein the composition further contains at least one member selected from hydrotropic agents, builders, electrolytes, dust-preventing agents, pH stabilizers and water softeners.

4. The use of the dyestuff composition defined in Claims 1 to 3 for dyeing or printing cellulose fiber materials.

**Patentansprüche**

1. Eine Farbstoff-Zusammensetzung zum Färben von Cellulosefaserstoffen, bestehend aus C.I. Reactive Blue 19 der Formel

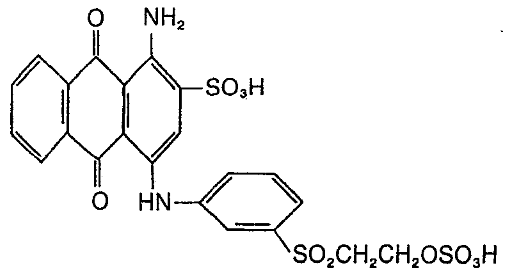

und einem $C_1$ bis $C_4$-Alkylnaphthalinsulfonsäure/Formaldehyd-Kondensat mit einem Sulfonierungsgrad von 50 bis 150% und einem durchschnittlichen Kondensationsgrad von 1,1 bis 3,0 in einem Gewichtsverhältnis von 20 bis 99 bis 1 zu 80 und üblichen Zusätzen.

2. Farbstoff-Zusammensetzung nach Anspruch 1, wobei die Alkylnaphthalinsulfonsäure mindestens einer der Stoffe Methyl-, Äthyl-, Propyl- und Butyl-Naphthalinsulfonsäuren ist.

3. Farbstoff-Zusammensetzung nach Anspruch 1, wobei die Zusammensetzung mindestens einen Lösungsvermittler, Waschmittelverstärker, Elektrolyten, Staubverhinderungsmittel, pH-Stabilisator und/oder Wasserenthärter enthält.

4. Verwendung der Farbstoff-Zusammensetzung gemäss Ansprüchen 1 bis 3 zum Färben oder Bedrucken von Cellulosefaserstoffen.

**Revendications**

1. Composition de matières colorante pour la teinture de matières à base de fibres cellulosiques, caractérisée en ce qu'elle est formée de Bleu réactif C.I. 19 formule

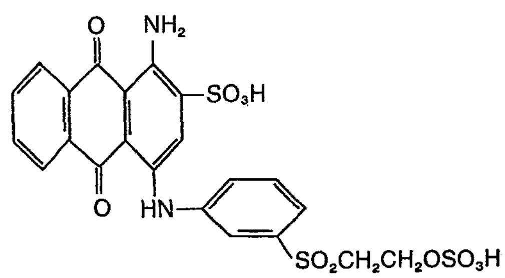

et d'un produit de condensation d'acide alcoyl($C_1$–$C_4$)-naphthalènesulfonique/aldéhyde formique, ayant un degré de sulfonation de 50 à 150% et un degré moyen de condensation de 1,1 à 3,0, dans un rapport de poids de 20 à 99 : 1 à 80, ainsi que d'additifs usuels.

2. Composition de matière colorante selon la revendication 1, caractérisée en ce que l'acide alcoylnaphthalène-sulfonique est au moins l'un des acides du groupe formé par les acides méthyl-, éthyl-, propyl- et butyl-naphthalène-sulfoniques.

3. Composition de matière colorante selon la revendication 1, caractérisée en ce qu'elle contient en outre au moins un constituant choisi parmi

des agents hydrotropiques, des agents de structuration, des électrolytes, des agents antipoussière, des stabilisants du pH et des adoucissants de l'eau.

4. Utilisation de la composition de matière colorante selon l'une quelconque des revendications 1 à 3 pour la teinture ou l'impression de matières à base de fibres cellulosiques.